# EUROPÄISCHE PATENTANMELDUNG

(11) **EP 4 696 643 A1**
(43) Veröffentlichungstag der Anmeldung: **18.02.2026**
(21) Anmeldenummer: 25196179.3
(22) Anmeldetag: 15.08.2025
(51) Int. Cl.: B67D 7/04, B60S 5/02, B67D 7/40, B67D 7/42, B67D 7/48, B67D 7/52, G07F 13/00

(54) **TANKSÄULE MIT GALGEN FÜR TANKSCHLÄUCHE AUF DEREN OBERSEITE**

(30) Priorität: 15.08.2024 DE 102024123368
(71) Anmelder: Deutsche Tamoil GmbH, 20354 Hamburg (DE)
(72) Erfinder: Korzilius, Mark, 20149 Hamburg (DE)
(74) Vertreter: Heuking Kühn Lüer Wojtek PartGmbB

(57) **Zusammenfassung**

Die Erfindung betrifft ein Energie-Modul (1) zur Bereitstellung verschiedener Kraftstoffarten über separate Tankschläuche (5), die einen variablen Arbeitsbereich (VA) zur beidseitigen Betankung von Fahrzeugen (10) über die am Ende der jeweiligen Tankschläuchen (5) befindlichen Zapfpistolen (4) besitzen, wobei das Energie-Modul eine nach oben abschließende Oberseite (11) sowie eine dem zu betankenden Fahrzeug zugewandte Vorderseite (12) mit mehreren Aufnahmeeinheiten (3) zur Halterung der jeweiligen Zapfpistole vor und nach der Betankung und mit einem Bedienmodul (7) zumindest für die Betankung umfasst, wobei mindestens eine Galgenvorrichtung (2) auf der Oberseite des Energie-Moduls angeordnet ist, die pro Tankschlauch einen Galgen (21) mit einer Laufschiene (22) entlang des Galgens umfasst, wobei die Galgen der Galgenvorrichtung im Wesentlichen zueinander parallel ausgerichtet sind und über die Vorderseite des Energie-Moduls herausragen, vorzugsweise um einen Überstand (UL) von mindestens 50cm, wobei der jeweilige Tankschlauch in mehreren Schlaufen (51) hintereinander entlang der Laufschiene als Schlauchauszug angeordnet ist, wobei jede Schlaufe mit einer entlang der Laufschiene schiebbaren Schlaufenaufhängung (23) mit der Laufschiene verbunden ist, sodass der Arbeitsbereich des jeweiligen Tankschlauchs mittels Ziehen am Tankschlauch entlang der Laufschiene ziehharmonikaartig vergrößert oder verkleinert werden kann, wobei das Energie-Modul eine Längsrichtung (LR) parallel zu dem zu betankenden Fahrzeug in Betankungsposition (BP) besitzt und die Galgen der Galgenvorrichtung in Galgenrichtung einem Winkel (α) kleiner 90 Grad, vorzugsweise zwischen 50 und 70 Grad, zur Längsrichtung des Energie-Moduls ausgerichtet sind, sodass die Galgen den variablen Arbeitsbereich für das sich in Betankungsposition befindliche Fahrzeug mit Zugang von dessen Hinterseite (10a) aus definieren.

## Beschreibung

### Gebiet der Erfindung

Die vorliegende Erfindung betrifft ein Energie-Modul zur Ermöglichung eines beidseitigen Betankens von Fahrzeugen mit einer Galgenvorrichtung für mehrere Tankschläuche mit einem variablen Arbeitsbereich für die jeweiligen Tankschläuche, eine Tankstelle mit ein oder mehreren solchen Energie-Modulen und ein Verfahren zur beidseitigen Betankung von Fahrzeugen unter Verwendung eines solchen Energie-Moduls.

### Hintergrund der Erfindung

Eine Zapfsäule ist ein Apparat an einer Tankstelle, mit dem Kraftstoff und/oder Zusatzstoffe zur Abgasnachbehandlung in das zu betankende Fahrzeug eingefüllt wird. Das Zapfventil - im Nachfolgenden Zapfpistole genannt - ist über einen Tankschlauch mit der Zapfsäule verbunden. Die Zapfpistole ist das Gerät am vorderen Ende des Tankschlauchs, das in die Tanköffnung des Fahrzeugs eingeführt wird. Über das Zapfventil wird der Kraftstoff in den Tank des Fahrzeugs, das ein Land-, Wasser- oder Luftfahrzeuges sein kann, gefüllt.

Bei derzeitig verwendeten Tanksäulen müssen Fahrzeuge immer so an der Tanksäule halten, dass deren Tankstutzen auf der der Tanksäule zugewandte Seite des Fahrzeugs ist, da einerseits die Tankpistole nur so leicht in den Tankstutzen eingeführt werden kann, um den Betankungsvorgang zu erleichtern und die Wahrscheinlichkeit von Verschüttungen oder Unfällen zu reduzieren, wie beispielsweise durch schlecht in die Tankstutzen eingeführte Zapfpistolen oder durch Stolperfallen aufgrund der über das Fahrzeug gespannte Tankschläuche. Dies verhindert auch, dass der Tankschlauch unter Spannung steht, was zu Bruch oder Lecks des Tankschlauchs führen könnte. Manche Fahrzeuge haben den Tankstutzen auf den linken Fahrzeugseite, manche anderen Fahrzeuge dagegen auf der rechten Seite. Welche dieser Fahrzeuge die Tankstellen in gleichen Moment anfahren, ist unbestimmt. Der Zwang, die Tanksäulen mit dem Fahrzeug von der richtigen Seite aus anzufahren, führt bei stark frequentierten Tankstellen oft dazu, dass trotz einer theoretisch ausreichenden Anzahl an Zapfpositionen die Fahrzeuge dennoch aufeinander warten müssen, weil die wartenden Fahrzeuge den Tankstutzen alle auf der gleichen Seite haben und somit die Hälfte der Tankpositionen für den Betankungsvorgang dieser Fahrzeuge ungeeignet sind und somit ungenutzt frei bleiben.

Es wäre daher wünschenswert, eine benutzerfreundliche Tanksäule zur Verfügung zu haben, mit der die Effizienz der Betankung bei Beibehaltung der Tanksicherheit gesteigert und Verschüttungen an Kraftstoff oder Unfälle beim Betanken vermieden oder zumindest vermindert werden kann.

### Zusammenfassung der Erfindung

Die Aufgabe der Erfindung besteht darin, eine benutzerfreundliche Zapfsäule zur Verfügung zu stellen, mit der die Effizienz der Betankung bei Beibehaltung der Tanksicherheit gesteigert und Verschüttungen an Kraftstoff oder Unfälle beim Betanken vermieden oder zumindest vermindert werden kann.

Die Aufgabe wird gelöst durch ein Energie-Modul zur Bereitstellung verschiedener Kraftstoffarten über separate Tankschläuche, die einen variablen Arbeitsbereich zur beidseitigen Betankung von Fahrzeugen über die am Ende der jeweiligen Tankschläuchen befindlichen Zapfpistolen besitzen, wobei das Energie-Modul eine nach oben abschließende Oberseite sowie eine dem zu betankenden Fahrzeug zugewandte Vorderseite mit mehreren Aufnahmeeinheiten zur Halterung der jeweiligen Zapfpistole vor und nach der Betankung und mit einem Bedienmodul zumindest für die Betankung umfasst, wobei mindestens eine Galgenvorrichtung auf der Oberseite des Energie-Moduls angeordnet ist, die pro Tankschlauch einen Galgen mit einer Laufschiene entlang des Galgens umfasst, wobei die Galgen der Galgenvorrichtung im Wesentlichen zueinander parallel ausgerichtet sind und über die Vorderseite des Energie-Moduls herausragen, vorzugsweise um einen Überstand von mindestens 50cm, wobei der jeweilige Tankschlauch in mehreren Schlaufen hintereinander entlang der Laufschiene als Schlauchauszug angeordnet ist, wobei jede Schlaufe mit einer entlang der Laufschiene schiebbaren Schlaufenaufhängung mit der Laufschiene verbunden ist, sodass der Arbeitsbereich des jeweiligen Tankschlauchs mittels Ziehen am Tankschlauch entlang der Laufschiene ziehharmonikaartig vergrößert oder verkleinert werden kann, wobei das Energie-Modul eine Längsrichtung parallel zu dem zu betankenden Fahrzeug in Betankungsposition besitzt und die Galgen der Galgenvorrichtung in Galgenrichtung einem Winkel α kleiner 90 Grad, vorzugsweise zwischen 50 und 70 Grad, zur Längsrichtung des Energie-Moduls ausgerichtet sind, sodass die Galgen den variablen Arbeitsbereich für das sich in Betankungsposition befindliche Fahrzeug mit Zugang von dessen Hinterseite aus definieren.

Der Begriff "Energie-Modul" bezieht sich auf eine Versorgungsmodul, mit dem Fahrzeuge mit Kraftstoff versorgt werden können. Da es unterschiedliche Kraftstoffarten für unterschiedliche Fahrzeuge gibt, umfasst das Energie-Modul eine Vielzahl an separaten Tankschläuchen, mit denen jeweils eine Kraftstoffart über eine Zapfpistole an Ende des Tankschlauchs an den betreffenden Tankstutzen des Fahrzeugs eingefüllt werden kann. Es versteht sich von selbst, dass ein Fahrzeug üblicherweise nur mit einer bestimmten Kraftstoffsorte betankt wird. Da hier aber viele verschiedene Fahrzeuge nacheinander betankt werden können, müssen alle dafür üblichen Kraftstoffsorten und deren separate Tankschläuche für die betreffenden Fahrzeuge verfügbar sein. Eine Ausnahme bilden sogenannte Hybridfahrzeuge, die neben einem elektrischen Antrieb noch einen weiteren Antrieb für flüssige Kraftstoffe besitzen. Hier könnte für Hybridfahrzeuge die Betankung nacheinander mittels unterschiedlicher Kraftstoffe (Strom oder flüssiger Kraftstoff wie Diesel oder Benzin) erfolgen. Der Begriff "Kraftstoff" umfasst hierbei die gewöhnlichen Kraftstoffe wie Diesel, Benzin, Autogas und Varianten davon als auch elektrische Energie, mit denen Elektrofahrzeuge geladen werden. Der Ladevorgang von Elektrofahrzeugen wird in der vorliegenden Erfindung auch Betankung genannt, da solch eine Aufladung ebenfalls ein Auffüllen (hier der Batterie) mit Kraftstoff (hier elektrische Energie) ist. Die Tankschläuche stellen die Verbindung zwischen der Vorderseite des Energie-Moduls und der Zapfpistole am Ende des Tankschlauchs her. Durch die Zapfpistole wird der Kraftstoff an das Fahrzeug geliefert. Die Zapfpistole bezeichnet hierbei die Komponente, die in den Tankstutzen des zu betankenden Fahrzeugs eingeführt wird. Die Zapfpistole umfasst zusätzlich den Handgriff zum Freigeben bzw. Beenden des Betankens durch den Bediener, der die Zapfpistole am Handgriff halten kann. Die Zapfpistole kann hierbei jede für den Tankvorgang geeignete Form besitzen, auch ohne Handgriff im heute üblichen Layout. Bei der Aufladung von Elektrofahrzeugen bezeichnet der Begriff "Tankschlauch" das Aufladekabel und der Begriff "Zapfpistole" den Ladestecker des Aufladekabels, da der Ladestrom durch dieser "Zapfpistole" an das Elektrofahrzeug geliefert wird. Das erfindungsgemäße Energie-Modul kann in unterschiedlichen Ausführungsformen einerseits für die Betankung mit einer Vielzahl an gewöhnlichen Kraftstoffen lediglich für Fahrzeuge mit Verbrennungsmotoren, andererseits für die Betankung von Fahrzeuge mit Verbrennungsmotoren mit gewöhnlichen Kraftstoffen in Kombination mit der Betankung (Aufladung) von Elektrofahrzeuge mit elektrischer Energie, oder auch für die alleinige Betankung (Aufladen) von Elektrofahrzeuge mit einer Vielzahl an separaten Ladekabelns (Tankschläuche) ausgestaltet sein. Als Fahrzeuge im Rahmen der vorliegenden Erfindung werden sämtliche Fortbewegungsmittel bezeichnet, die für die Fortbewegung Kraftstoff benötigen. Beispielsweise sind Fahrzeuge Kraftfahrzeuge (2- oder mehrrädrige Fahrzeuge), Lastkraftwagen, Lokomotiven, Wasserfahrzeuge etc.

Das Energie-Modul umfasst eine Vorderseite, eine Rückseite, eine Oberseite und eine Unterseite. Die Vorderseite ist dem zu betankenden Fahrzeug zugewandt. Auf dieser Seite sind alle Komponenten angeordnet, die für den Betankungsvorgang von dem jeweiligen Bediener zu bedienen sind, unter anderem die Zapfpistole und der Tankschlauch zum Einstecken der Zapfpistole in den Tankstutzen des Fahrzeugs. An der Vorderseite befindet sich auch das Bedienmodul, über das der Betankungsvorgang und die Bezahlung gestartet, überwacht und abgeschlossen werden kann. Mit der Unterseite steht das Energie-Modul auf einem Boden, beispielsweise der Fahrfläche auf einer Tankstelle oder auf einem Sockel, der von Fahrfläche umgeben ist. Die Oberseite schließt das Energie-Modul nach oben ab. Die Rückseite ist die Seite des Energie-Moduls, von der kein Betankungsvorgang gestartet werden kann. Bei beidseitigen Energie-Modulen als Doppeltankstelle kann der Betankungsvorgang beidseitig ausgeführt werden kann. Bei einer Doppelzapfstation gibt es daher diese Rückseite höchsten virtuell als Mittelfläche entlang der Längsachse der Doppelzapfstation, da das Energie-Modul als Doppelzapfsäule symmetrisch aufgebaut ist und eine beidseitige Vorderseite besitzt, wo auf beiden Vorderseiten der Betankungsvorgang ausgeführt werden kann.

Die Aufnahmeeinheiten bezeichnen die Komponenten der Zapfsäule, hier als Energie-Modul bezeichnet, mit denen die Zapfpistole nach Beendigung des Betankens gehalten wird, bis den nächste Tankvorgang starten soll. In einer Ausführungsform gleicht die Aufnahmeeinheit für die Zapfpistole dem Teil des für diese Zapfpistole vorgesehenen Tankstutzens des Fahrzeugs, der die Zapfpistole beim Tankvorgang aufnimmt. Damit ist ein sicherer Halt der Zapfpistole in der Aufnahmeeinheit gewährleistet, mit dem zugleich die Zapfpistole mit dem vorderen Ende in einem geeigneten Winkel nach unten gehalten werden kann.

Um die beidseitige Betankung mit den Tankschläuchen mit einem variablen Arbeitsbereich zu ermöglichen, umfasst das Energie-Modul eine Galgenvorrichtung. Diese ist auf der Oberseite des Energie-Moduls angeordnet, um sich oberhalb der Gehwege des Benutzers und der zu betankenden Fahrzeuge zu befinden und zu erstrecken, sofern die Fahrzeuge keine außergewöhnliche Höhe besitzen, für die das Energie-Modul nicht vorgesehen ist. Die Galgenvorrichtung umfasst eine Vielzahl an separaten Galgen, von denen jeder einen einzelnen Tankschlauch separat von den anderen Tankschläuchen oberhalb des Kopfes des Benutzers hält. Der Galgen ist eine längliche, feste und nicht bewegliche Konstruktion, beispielsweise eine Stange oder ein Rohr, gegebenenfalls mit ein oder mehrfachen Knickstellen. Durch die starre Form ist der Galgen in der Lage, eine Haltekraft von bis zu 2000 N oder mehr auszuüben. Der Galgen hat die Aufgabe, einerseits über die Vorderseite des Energie-Moduls hinauszuragen und den Tankschlauch beweglich zu halten, sodass der Tankschlauch bis zum äußeren Ende des Galgens entlang des Galgens verfahren werden kann, um den Arbeitsbereich des freien Abschnitts des Tankschlauchs zwischen letzter Aufhängung des Tankschlauchs am Galgen und der Zapfpistole variabel zu gestalten. Die Länge, um die der Galgen über die Vorderseite des Energie-Moduls herausragt, wird als Überstand bezeichnet. Der Überstand ist am größten, wenn die Galgen in einem rechten Winkel zur Vorderseite des Energie-Moduls angeordnet sind. Der freie Abschnitt des Tankschlauchs bezeichnet den Abschnitt des Tankschlauchs, der keine Aufhängungen für den Galgen besitzt und damit frei im Raum beweglich ist. Sofern der freie Abschnitt des Tankschlauchs eine ausreichende Länge besitzt, um einen beispielsweise auf der dem Energie-Modul zugewandten Seite des Fahrzeugs zu erreichen, braucht der Tankschlauch mit seinen Schlaufen nicht entlang des Galgens zur Vergrößerung des Arbeitsbereichs gezogen werden. Falls sich der Tankstutzen dagegen auf der Seite des Fahrzeugs befindet, die die von dem Energie-Modul abgewandten Seite des Fahrzeugs ist, kann der Arbeitsbereich des Tankschlauchs ziehharmonikaartig vergrößert werden, indem die Aufhängungen des Tankschlauch entlang einer Laufschiene an der Unterseite des Galgens gezogen werden. Hierbei bleibt zwar die Länge des freien Abschnitts des Tankschlauchs gleich, aber der in Schlaufen aufgehängte andere Abschnitt des Tankschlauchs wird in seiner Länge vergrößert, indem die Schlaufen in eine mehr gestreckte Führung des Tankschlauchs am Galgen übergehen. Die jeweiligen Galgen besitzen dazu eine lineare Form. In der Galgenvorrichtung sind die Galgen im Wesentlichen parallel zueinander ausgerichtet, damit die Aufhängungen und Führungen benachbarter Tankschläuche bei deren Handhabung (Herausziehen, Zurückziehen) nicht miteinander kollidieren. Der Begriff "im Wesentlichen" bezeichnet eine Abweichung von der Parallelität der einzelnen Galgen kleiner 5 Grad, vorzugsweise kleiner 2 Grad. Im Idealfall sind die Galgen parallel zueinander ausgerichtet. Das Material der Galgen muss die Tankschläuche tragen können. Jedes dafür geeignete Material könnte verwendet werden. Da diese ein nicht unerhebliches Gewicht besitzen, sind die Galgen vorzugsweise aus Metall, beispielsweise Stahl.

Der Begriff "Schlaufenaufhängung" bezeichnet eine Vorrichtung, mit der ein Schlauch in mehreren Schlaufen mit jeweilige Aufhängepunkten an einer verschiebbaren Halterung, beispielsweise einer Laufschiene, befestigt wird. Der Begriff "Schlaufe" bezeichnet dabei einen bogenförmig herabhängenden Abschnitt eines Schlauchs, der zwischen zwei Aufhängepunkten hängt. Der Schlauchauszug bezeichnet die Länge des Schlauchs, die aus der Aufhängung herausgezogen und genutzt werden kann. Die Laufschienen können jede für ihren Zweck geeignete Form besitzen, beispielsweise ein Rohr, an dem Ringe als Aufhängungen entlang rutschen können, oder beispielsweise eine nach unten geöffnete Schiene, in der Halterungen als Aufhängungen entlang der Öffnung in der Schiene rutschen kann.

In anderen Ausführungsformen könnte die Laufschiene auch eine Teleskopschiene oder Seilschiene sein.

Um mit diesem variablen Arbeitsbereich beide Seiten eines Fahrzeugs zum Betanken erreichen (die Seite des Tankstutzens hängt bekanntlich vom Typ des Fahrzeugs ab) und alle Typen an Fahrzeugen mit dem Energie-Modul gleichmäßig komfortable betanken zu können, ist die Galgenvorrichtung mit ihrer Galgenrichtung (Richtung entlang des Galgens und damit auch entlang der Laufschiene) dafür in einem Winkel α kleiner 90 Grad, vorzugsweise zwischen 50 und 70 Grad, zur Längsrichtung des Energie-Moduls ausgerichtet. Das Fahrzeug in seiner leicht gegenüber dem ersten Schenkel der Vorderseite des Energie-Moduls leicht vorgefahrenen (daran vorbeigefahren) Betankungsposition kann dann mit den entsprechend ausgerichteten Galgen ohne das bei gewöhnlichen Tankstellen dann notwendige Zerren am Tankschlauch betankt werden. Bei der vorliegenden Erfindung bleiben die Tankschläuche ohne Spannung und die Zapfpistolen lassen sich in ihrer vorgesehenen Ausrichtung in die Tankstutzen einführen, was den Betankungsvorgang leicht, komfortabel und sicher macht und gleichermaßen das Material der Tankstellen, insbesondere des Tankschlauchs schont.

Das Energie-Modul kann beispielsweise für eine Steuerung des Betankungsvorgangs, für eine Freischaltung der Zapfpistole zum Betanken und ein Verschließen der Tankleitung nach Beendigung des Betankens eine entsprechende Steuereinheit und geeignete Sensoren an den dafür geeigneten Positionen umfassen. Die Steuereinheit kann beispielsweise auch die Angaben zum Betankungsvorgang für den Benutzer auf einer geeigneten Weise, beispielweise auf dem mit der Steuereinheit verbundenen Bedienmodul, darstellen. Die Steuereinheit kann dazu ein oder mehrere Prozessoren umfassen, auf denen eine Steuerungssoftware installiert ist und ausgeführt wird.

Das erfindungsgemäße Energie-Modul stellt somit eine benutzerfreundliche Zapfsäule zur Verfügung, mit der die Effizienz der Betankung bei Beibehaltung der Tanksicherheit gesteigert und Verschüttungen an Kraftstoff oder Unfälle beim Betanken vermieden oder zumindest vermindert werden kann.

In einer Ausführungsform weist die Vorderseite als die den zu betankenden Fahrzeugen zugewandte Seite eine vom zu betankenden Fahrzeug zurückspringende V-Form mit ersten und zweiten V-Schenkeln auf, wobei die Aufnahmeeinheiten im ersten V-Schenkel und das Bedienmodul im zweiten Schenkel angeordnet sind. Die V-Schenkel können jeden geeigneten Winkel zueinander aufweisen. Vorzugsweise ist der Winkel zueinander nicht kleiner als 90 Grad. Durch die V-Form wird dem Benutzer beim Betanken ein sicherer Aufenthaltsplatz im vom Fahrzeug zurückspringenden Bereich der V-Form gegenüber dem Fahrzeug angeboten, in dem er zwischen Fahrzeug und Energie-Modul alle notwendigen Handlungen ausführen kann. Durch die räumliche Trennung der Anordnung der Zapfpistolen in den Aufnahmeeinheiten und dem Bedienmodul mit einer geeigneten Anzeigevorrichtung für den Tankvorgang kann das Bedienmodul entsprechend groß und in geeigneter Höhe angeordnet werden, um dem Benutzer den besten Bedienungskomfort bereitzustellen.

In einer weiteren Ausführungsform ist dabei die Galgenvorrichtung auf der Oberseite des Energie-Moduls über dem ersten V-Schenkel angeordnet. Die Anordnung auf der Oberseite ermöglicht es, den Tankschlauch am Galgen in einer Höhe oberhalb des Benutzers und der gewöhnlichen Autodächer zu führen, damit der gesamte Arbeitsbereich des Tankschlauchs ohne Behinderung durch die Benutzer und die zu betankenden Fahrzeuge zugänglich ist. Die Anordnung über dem ersten V-Schenkel ermöglicht es, dass sich die Zapfpistolen in ihren Aufnahmeeinheiten im Wesentlichen senkrecht unterhalb der den jeweiligen Tankschläuchen und Zapfpistolen zugeordneten Galgen befinden, um die für die jeweilige Betankung zu benutzende Zapfpistole und Tankschlauch ohne Überkreuzungen mit den nicht benutzten Tankschläuchen zu verwenden und gegebenenfalls entlang des Galgens zu führen.

In einer weiteren Ausführungsform ragen die Galgen der Galgenvorrichtung im Wesentlichen im 90 Grad-Winkel zur Vorderseite des ersten V-Schenkels über diese Vorderseite heraus. Der Begriff "im Wesentlichen" bezeichnet eine Abweichung der 90 Grad-Ausrichtung der einzelnen Galgen zur Vorderseite von kleiner 5 Grad, vorzugsweise kleiner 2 Grad. In dieser Ausrichtung der Galgen wird bei einer vorhandenen V-Form der Vorderseite gerade der Winkel α zwischen Galgenausrichtung und Längsrichtung des Energie-Moduls kleiner 90 Grad, vorzugsweise zwischen 50 und 70 Grad, erreicht, sodass die Galgen insbesondere hier den variablen Arbeitsbereich für das sich in Betankungsposition befindliche Fahrzeug mit Zugang von dessen Hinterseite aus ermöglichen.

In einer weiteren Ausführungsform umfasst die Vorderseite im Bereich der Aufnahmeeinheiten für die Zapfpistolen eine geeignet geformte Einbuchtung, so dass die in den Aufnahmeeinheiten gehalterten Zapfpistolen nicht über die Vorderseite außerhalb der Einbuchtung herausragen. Auf diese Weise ist das Risko für den Benutzer, sich an hervorstehenden Kanten beispielsweise der Zapfpistolen zu stoßen oder zu verletzen, deutlich reduziert. Diese Anordnung trägt damit zur Gerätesicherheit des Energie-Moduls bei.

In einer weiteren Ausführungsform besitzt der jeweilige Tankschlauch zwischen letzter Schlaufenaufhängung vor der Zapfpistole und der Zapfpistole eine nicht variable Länge, die so bemessen ist, dass die Zapfpistole bei einem freien Hängen des Tankschlauchs an der letzten Schlaufenaufhängung nicht einen Boden, auf dem das Energie-Modul aufgestellt ist, berührt. So ist die Zapfpistole vor Beschädigungen durch ein Fallenlassen beim Betankungsvorgang oder bei einem Herausfallen aus der Aufnahmeeinheit bei nicht sachgerechter Platzierung der Zapfpistole in der Aufnahmeeinheit geschützt. Außerdem definiert dann die Galgenhöhe über dem Boden den minimalen Arbeitsbereich bei nicht entlang des Galgens ausgezogenem Tankschlauch. Auch dieser minimale Arbeitsbereich erlaubt durch die Länge des freien Tankschlauchs von bis zu 2 Metern bereits einen benutzerfreundlichen flexiblen Arbeitsbereich für die Betankung, der für die Betankungen von Fahrzeugen ausreicht, die einen Tankstutzen auf der Seite des Fahrzeugs, die der der Vorderseite des Energie-Moduls zugewandt ist, besitzen.

In einer weiteren Ausführungsform umfasst jede Zapfpistole einen Handgriff, der zumindest bereichsweise, vorzugsweise vollständig, eine Beschichtung umfasst, die eine antibakterielle und/oder antivirale Wirkung besitzt, vorzugsweise umfasst die Beschichtung Silberionen. Als antibakterielle / antivirale Materialien können beispielsweise auch Nanosilber, Kupfer, Hydrogele, Chitosan, Silane, Sulfate, Graphen und Kohlenstoff-Nanoröhren, AMPS, Flüssigmetalle und viele andere verwendet werden. Solche Materialien können selbstreinigende Beschichtungen und Oberflächen bilden. Zum Beispiel kann eine antivirale Beschichtung mit selbstreinigender Technologie auf Basis von quaternärem Silan-Ammonium bereitgestellt werden. Auch polymere Biozide verkörpern antimikrobielle Eigenschaften. Dotiertes Hydrogelen könnte antimikrobielle Wirkstoffe umfassen und/oder freisetzen. Der Handgriff der Zapfpistole könnte eine Beschichtung aus einem dieser Materialien umfassen. Diese Materialien könnten beispielsweise als Lack mittels Streichen, Sprühen oder auf eine andere Weise auf den Handgriff der Zapfpistole aufgetragen werden.

In einer weiteren Ausführungsform umfasst die Aufnahmeeinheiten für die Zapfpistolen mit Handgriff jeweils eine Führungsschiene, auf der der Handgriff der Zapfpistole während der Halterung durch die Aufnahmeeinheit in definierter Position ruht, und einen Schalter, beispielsweise einen Magnetschalter, wobei der Schalter dazu vorgesehen ist, einerseits das Vorhandensein der Zapfpistole in der definierten Position zu detektieren und andererseits nach Entnahme der Zapfpistole aus der Aufnahmeeinheit den Tankvorgang für diese Zapfpistole freizuschalten. Die Führungsschiene definiert die gewünschte Halteposition der Zapfpistole in der Aufnahmevorrichtung und stellt eine sichere Auflage bereit. Durch diesen Auflageschalter kann der Beginn und die Beendigung einer Betankung durch den Benutzer sicher detektiert werden und das Energie-Modul entsprechend gesteuert werden. Der Schalter ist dabei mit einer Steuereinheit des Energie-Moduls geeignet verbunden, um die entsprechenden Signale für das Steuerprogramm zu übermitteln.

In einer weiteren Ausführungsform umfassen die Zapfpistolen des Energie-Moduls, die zur Betankung mit flüssigen Kraftstoffen jeglichen Typs dienen, ein Ventil im Auslauf der jeweiligen Zapfpistole, das nach Beendigung des Tankvorgangs den Auslauf der Zapfpistole zur Vermeidung von abtropfendem Kraftstoff verschließt. Durch dieses Ventil wird verhindert, dass nach Beendigung der Betankung bei der Rückführung der Zapfpistole in die Aufnahmeeinheiten Kraftstoff herausleckt und auf den Boden um die Tankstelle herum tropft oder über die Zapfpistole und deren Handgriff läuft. So bleibt der Bereich, der für die Betankung der Fahrzeuge vorgesehen ist (der Bereich, in dem Fahrzeuge für eine Betankung mit dem Energie-Modul anhalten), von ungewollten Verschmutzungen durch herabtropfenden Kraftstoff verschont. Verschmutzungen dieser Art können auch Geruchsbelästigungen darstellen und werden so vermieden.

In einer weiteren Ausführungsform ist dabei das Ventil ein Magnetventil, das in Strömungsrichtung des Kraftstoffs bei Betankung gesehen vor einem Venturizapfen im Auslauf für eine automatische Abschaltung der der Zapfpistole angeordnet ist. Ein Magnetventile ist unkompliziert anzusteuern und platzsparend in die Zapfpistole zu integrieren. Ein solches Ventil beendet den Kraftstofffluss in Sekunden und verhindert ein Nachtropfen.

In einer weiteren Ausführungsform ist das Energie-Modul als Doppel-Zapfstation ausgeführt, die auf beiden Seiten entlang zu Ihrer Längsrichtung jeweilige Vorderseiten mit jeweiligen mehreren Aufnahmeeinheiten zur Halterung der jeweiligen Zapfpistole vor und nach der Betankung und mit einem Bedienmodul zumindest für die Betankung umfasst und auf der gemeinsamen Oberseite je eine Galgenvorrichtung zu jeder der beiden Vorderseiten mit den betreffenden Galgen und Tankschläuchen angeordnet ist. Die Doppel-Zapfstation hat somit im Vergleich zu einem Energie-Modul mit nur einer Tankseite keine echte Hinterseite mehr. Im Prinzip stehen zwei einseitig zur Tankung benutzbare Energie-Module Rücken an Rücken aneinander und deren jeweiligen Vorderseiten sind den auf beiden Seiten zu betankenden Fahrzeugen zugewandt. Die Doppel-Zapfstation kann dabei die notwendigen inneren Komponenten zur Betankung für beide Vorderseiten nutzen, sodass die Doppel-Zapfstation die inneren Komponenten wie Kraftstoffleitungen zu den Kraftstofftanks und Pumpen zur Beförderung des Kraftstoffs sowie die Steuerungskomponenten für den Betankungsvorgang effektiver ausnutzt. Hierbei ist es vorteilhaft, wenn die Vorderseiten, die Aufnahmeeinheiten, die Bedienmodule und die Galgenvorrichtungen mit den jeweiligen Galgen für beide Seiten der Doppel-Zapfstation zu der Längsrichtung der Doppel-Zapfstation spiegelbildlich symmetrisch zueinander angeordnet sind. In dieser Konfiguration ist die Bereitstellung von zwei separaten Tankpositionen durch die Doppel-Zapfstation am raumeffektivsten, zumal die gemeinsame Oberseite für die beiden Galgenvorrichtungen genutzt werden kann, was platzsparend ist.

In einer weiteren Ausführungsform umfasst das Energie-Modul mindestens ein Servicemodul zumindest zur Abgabe eines oder mehrere Elemente umfassend Lebensmittel, Getränke, Sanitärartikel, Zigaretten, vorzugsweise mittels eines oder mehrerer Ausgabeautomaten, das ebenfalls angrenzend an dem für die Betankung der Fahrzeuge vorgesehen Bereich angeordnet ist. Hierbei kann das Energie-Modul mit dem Servicemodul eine bauliche Einheit mit einem gemeinsamen Gehäuse bilden. Ein solches Energie-Modul stellt eine kompakte Einheit zur Versorgung der Benutzer mit Kraftstoff und anderen auf der Fahrt benötigten Waren dar und ermöglicht eine einfache Rundumversorgung des Benutzers. Über das Bedienmodul kann auch das Servicemodul bedient werden. Das Energie-Modul mit integriertem Servicemodul stellt eine kompakte Möglichkeit dar, nicht nur Fahrzeuge zu betanken, sondern vor, nach oder während des Betankens auch nützliche Produkte zu kaufen, die beispielsweise auf einer Autofahrt benötigt werden oder hilfreich sind. Das spart dem Benutzer des Energie-Moduls Zeit und Aufwand, da nicht umständlich Orte angefahren werden müssen, wo diese Produkte sonst erhältlich wären. Die technische Infrastruktur von Service-Modul und Steuerung des Energie-Moduls können ineinander integriert werden, so dass technische Komponenten gespart oder effektiver genutzt werden können. Der Abgabeautomat bezeichnet jegliches Gerät, das dafür geeignet ist, dem Benutzer des Energie-Moduls ohne weiteres Hilfspersonal Waren auszugeben. Solche Lebensmittelautomaten sind dem Fachmann vom Grundsatz her bekannt. Lebensmittel bezeichnen hier Waren, die essbar oder trinkbar sind. Der Abgabeautomat könnte dabei auch andere Waren an die Benutzer abgeben, die keine Lebensmittel sind. Es ist für den Genuss der vom Abgabeautomaten erhaltenen Lebensmittel für den Benutzer sehr vorteilhaft, wenn sich dieser beim Betankungsvorgang am Energie-Modul nicht verschmutzt und beispielsweise mit sauberen Händen die Lebensmittel in Empfang nehmen kann. Zusätzlich ist es für den Genuss der Lebensmittel vorteilhaft, wenn es keine oder nur stark reduzierte Verunreinigungen im Bereich der Betankung gibt, sodass auch Geruchsbelästigungen durch Flüssigkeiten, z.B. Kraftstoff, beim Erhalt der Lebensmittel unterhalb einer wahrnehmbaren Schwelle liegen. Dieses wird mit dem erfindungsgemäßen Energie-Modul u.a. dadurch erreicht, indem Zapfpistolen für den Kunden bereitgestellt werden, die mit den voranstehenden Maßnahmen am Handgriff und an der Zapfpistole einen sauberen Griff ohne nennenswerte Rückstände an Kraftstoffen oder anderer Verunreinigungen sowie einen Tropfschutz besitzen.

In einer weiteren Ausführungsform ist das Servicemodul im Falle des Energie-Moduls ausgebildet als Doppel-Zapfstation als gemeinsames von beiden Seiten der Doppel-Zapfstation benutzbares Servicemodul ausgeführt. Hierbei kann das Servicemodul einen für Menschen bereitgestellten Durchgang von einer der Seite zu der anderen der Seiten der Doppel-Zapfstation umfassen, um gegebenenfalls bei nur einseitig vorhandenen Ausgabeautomaten im Servicemodul diese von beiden Seiten auf dem kürzesten Weg erreichen zu können.

In einer weiteren Ausführungsform umfasst das Energie-Modul ein in die Vorderseite integriertes Luftmanagementsystem zumindest zum Abblasen von Frischluft durch eine Belüftungsöffnung in der Vorderseite, wobei die Belüftungsöffnung und die Menge der abgeblasenen Frischluft so gestaltet sind, dass ein Luftstrom der abgeblasenen Frischluft etwaige Tank-Gase von dem Energie-Modul entfernt oder zumindest verdünnt. Der Fachmann ist unter Berücksichtigung dieser technischen Lehre und Rahmenbedingung in der Lage, ein entsprechendes Luftmanagementsystem bereitzustellen. Hierbei kann die Belüftungsöffnung dabei oberhalb der Aufnahmeeinheiten so angeordnet sein, dass die Frischluft von oben über die Aufnahmeeinheiten hinweg nach unten in Richtung eines Bereichs zur Betankung des Fahrzeugs abgeblasen wird. Hierbei kann die Frischluft zusätzlich mit Duftstoffen versehen werden.

Da das Energie-Modul für eine Betankung von Fahrzeugen von deren Hinterseite aus ausgestaltet ist, eignet sich das erfindungsgemäße Energie-Modul besonders für die Anordnung eines Servicemoduls an dem für die Betankung vorgesehenen Teils des Energie-Moduls in Richtung der Vorderseite des zu betankenden Fahrzeugs. Damit kollidieren die beiden Benutzungszwecke (Betanken, Kaufen am Service-Modul) nicht miteinander, sondern sind räumlich zueinander beabstandet und damit voneinander separiert. Das Energie-Modul umfasst beispielsweise Aufnahmeeinheiten für vier Kraftstoffsorten, eine Zapfsäule mit antibakterieller Beschichtung für saubere Hände des Benutzers insbesondere wenn er am Servicemodul noch Lebensmittel kaufen möchte, Ein Bedienmodul als Master-Bildschirm unter anderem für Bezahlung des Tankens und der Produkte, gegebenenfalls ein Luftmanagementsystem für frische Luft oder Beduftung, Verkaufsautomaten im Servicemodul für Snaks oder Getränke, einen Zigarettenautomaten, ein Kaffeemodul mit entsprechender Robotik und gegebenenfalls weitere Tankstelleneinrichtungen wie beispielsweise ein Scheibenreinigungssystem auf der Rückseite des Kaffee-Moduls. Durch die kombinierte Nutzung des Bedienmoduls zur Unterstützung nicht nur des Betankungsvorgangs, sondern auch des Abgabevorgangs für Lebensmittel und ggf. anderen Waren werden die Komponenten des Energie-Moduls und des Abgabeautomaten effektiv genutzt und beiden Einheiten können mit reduzierter Anzeigeinfrastruktur betrieben werden, was technische Ressourcen einzusparen hilft.

Die Erfindung betrifft des Weiteren eine Tankstelle mit ein oder mehrere erfindungsgemäßen Energie-Modulen zur Bereitstellung verschiedener Kraftstoffarten über separate Tankschläuche, die einen variablen Arbeitsbereich zur beidseitigen Betankung von Fahrzeugen über die am Ende der jeweiligen Tankschläuchen befindlichen Zapfpistolen besitzen. Die voranstehend beschriebenen Vorteile werden in der Tankstelle kumulativ für die Tankstelle durch alle verwendeten Energie-Module erreicht.

Die Erfindung betrifft des Weiteren ein Verfahren zur beidseitigen Betankung von Fahrzeugen mit einem erfindungsgemäßen Energie-Modul mit verschiedenen Kraftstoffarten über separate Tankschläuche über die am Ende der jeweiligen Tankschläuchen befindlichen Zapfpistolen, wobei auf einer Oberseite des Energie-Moduls eine Galgenvorrichtung mit jeweils einem über die dem zu betankenden Fahrtzeug zugewandten Vorderseite des Energie-Moduls herausragenden Galgen pro Tankschlauch, wobei die Galgen jeweils einer Laufschiene entlang des jeweiligen Galgens umfassen, an der der jeweilige Tankschlauch mit Schlaufen in Form eines ziehharmonikaartig aus- und einziehbaren Schlauchauszug schlaufenweise aufgehängt ist, damit die Tankschläuche einen variablen Arbeitsbereich für die beidseitige Betankung besitzen, wobei das Energie-Modul eine Längsrichtung parallel zu dem zu betankenden Fahrzeug in Betankungsposition besitzt und die Galgen der Galgenvorrichtung in Galgenrichtung einem Winkel α kleiner 90 Grad, vorzugsweise zwischen 50 und 70 Grad, zur Längsrichtung des Energie-Moduls ausgerichtet sind, sodass die Galgen den variablen Arbeitsbereich für das sich in Betankungsposition befindliche Fahrzeug mit Zugang von dessen Hinterseite aus definieren, umfassend nachfolgende Schritte:
- Entfernen der für den Betankungsvorgang geeigneten Zapfpistole aus der betreffenden Aufnahmeeinheit,
- Ziehen des mit dieser Zapfpistole verbundenen Tankschlauchs entlang der Laufschiene in Richtung einer Hinterseite des zu betankenden Fahrzeugs zur ziehharmonikaartigen Vergrößerung des Arbeitsbereichs des Tankschlauchs, damit die Zapfpistole in einen Tankstutzen des Fahrzeugs gesteckt werden kann, unabhängig davon, auf welcher Position und Seite des Fahrzeugs der Tankstutzen angeordnet ist,
- Einstecken der Zapfpistole in den Tankstutzen des Fahrzeugs und Betanken des Fahrzeugs mit der Zapfpistole,
- Ziehen des Tankschlauchs entlang der Laufschiene in Richtung der Vorderseite des Energie-Moduls zur ziehharmonikaartigen Verkleinerung des Arbeitsbereichs des Tankschlauchs nach Beendigung des Betankens; und
- Aufnehmen der Zapfpistole in die betreffende Aufnahmeeinheit zum Abschluss des Betankens.

Die voranstehend beschriebenen Vorteile werden auch mit dem voranstehenden erfindungsgemäßen Verfahren durch das verwendete Energie-Modul erreicht.

Der Begriff "ein", "einer" oder "eine" bezeichnet bei der hier vorliegenden Erfindung nicht eine bestimmte Anzahl der damit bezeichneten betreffenden Komponenten, sondern schließt explizit die Möglichkeit mit ein, dass der beanspruchte Gegenstand neben der einen Komponente auch ein oder mehrere weitere dieser Komponenten umfassen kann. Somit ist der Begriff auch als "ein oder mehrere" zu verstehen. Ist dagegen die Anzahl der spezifizierten Komponenten gleich 1 gemeint, wird dies mit "genau ein/eine/einer" bezeichnet.

Die voranstehend beschriebenen Ausführungsformen können vom Fachmann im Rahmen der erfindungsgemäßen Lehre beliebig miteinander auch abweichend von den Anspruchsrückbezügen kombiniert werden.

### Kurze Beschreibung der Zeichnungen

- Fig.1:: eine Ausführungsform des erfindungsgemäßen Energie-Moduls zum Betanken von Fahrzeugen (a) in Seitenansicht und (b) in Draufsicht von oben;
- Fig.2:: eine Ausführungsform des erfindungsgemäßen Energie-Moduls im Ausschnitt des ersten Schenkels mit Galgenvorrichtung, Tankschläuchen und Zapfpistolen gehalten in den Aufnahmeeinheiten;
- Fig.3:: eine Seitenansicht im Schnittbild einer Zapfpistole gehalten in der Aufnahmeeinheit des Energie-Moduls;
- Fig.4:: eine weitere Ausführungsform des Energie-Moduls in perspektivischer Ansicht mit Luftmanagementsystem;
- Fig.5:: eine schematische Darstellung einer Ausführungsform der erfindungsgemäßen Tankstelle mit mehreren Energie-Modulen gemäß vorliegender Erfindung; und
- Fig.6:: eine Ausführungsform des erfindungsgemäßen Verfahrens zur beidseitigen Betankung von Fahrzeugen.

### Detaillierte Beschreibung der Zeichnungen

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

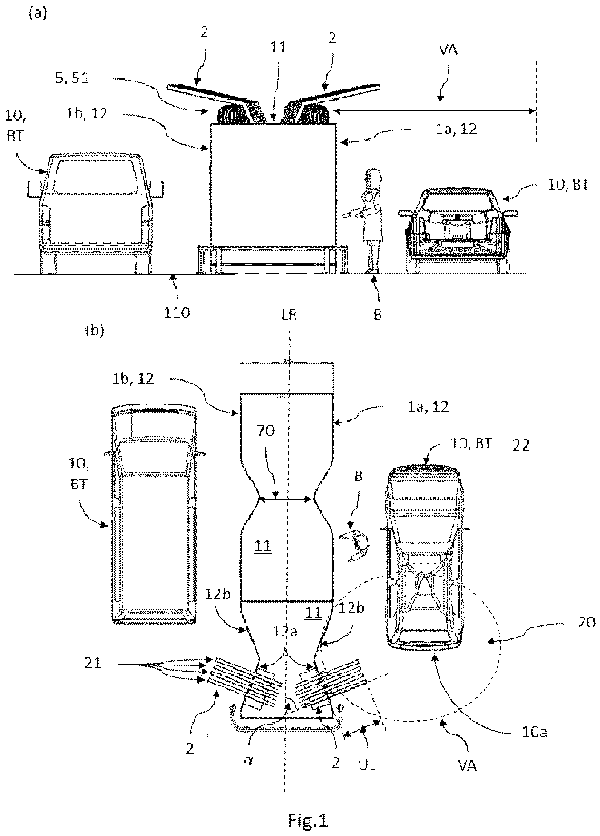

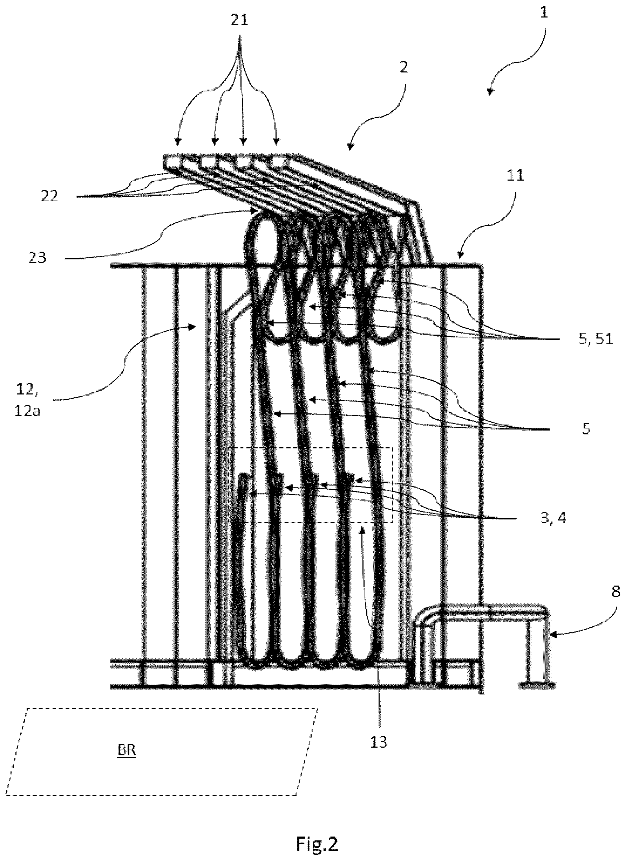

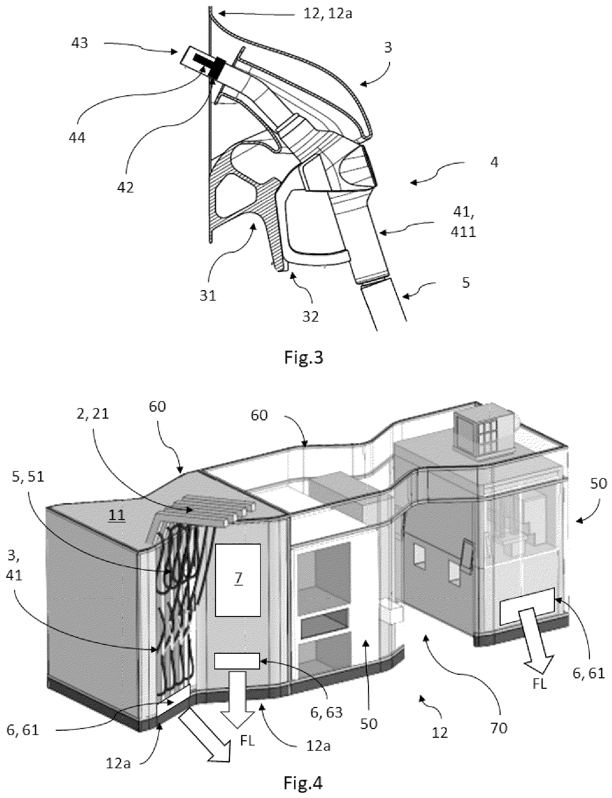

Fig.1 zeigt eine Ausführungsform des erfindungsgemäßen Energie-Moduls 1 zum Betanken von Fahrzeugen 10 (a) in Seitenansicht und (b) in Draufsicht von oben. Ein Energie-Modul 1 stellt verschiedener Kraftstoffarten über separate Tankschläuche 5, die einen variablen Arbeitsbereich VA zur beidseitigen Betankung von Fahrzeugen 10 über die am Ende der jeweiligen Tankschläuchen 5 befindlichen Zapfpistolen 4 für eine Betankung zur Verfügung. Das Energie-Modul 1 umfasst dabei eine nach oben abschließende Oberseite 11 sowie eine dem zu betankenden Fahrzeug 10 zugewandte Vorderseite 12 mit mehreren Aufnahmeeinheiten 3 zur Halterung der jeweiligen Zapfpistole 4 vor und nach der Betankung und ein Bedienmodul 7 zumindest für die Betankung. Das hier gezeigte Energie-Modul 1 ist hier als Doppel-Zapfstation ausgeführt, die auf beiden Seiten 1a, 1b entlang zu Ihrer Längsrichtung LR jeweilige Vorderseiten 12 mit jeweiligen mehreren Aufnahmeeinheiten 3 zur Halterung der jeweiligen Zapfpistole 4 vor und nach der Betankung und mit einem Bedienmodul 7 zumindest für die Betankung umfasst und auf der gemeinsamen Oberseite 11 je eine Galgenvorrichtung 2 zu jeder der beiden Seite 1a, 1b mit den betreffenden Galgen 21 und Tankschläuchen (5) angeordnet ist. In dieser Ausführungsform sind die Vorderseiten 12, die Aufnahmeeinheiten 3 (hier nicht explizit gezeigt), die Bedienmodule 7 (hier nicht explizit gezeigt) und die Galgenvorrichtungen 2 mit den jeweiligen Galgen 21 für beide Seiten der Doppel-Zapfstation 1 zu der Längsrichtung LR der Doppel-Zapfstation 1 spiegelbildlich symmetrisch zueinander angeordnet. Jede der Galgenvorrichtung 2 umfasst pro Tankschlauch 5 einen Galgen 21, hier insgesamt vier Galgen pro Galgenvorrichtung, mit jeweils einer Laufschiene 22 (siehe Figur 2) entlang des Galgens 21, wobei die Galgen 21 der Galgenvorrichtung 2 im Wesentlichen zueinander parallel ausgerichtet sind und über die Vorderseite 12 des Energie-Moduls 1 herausragen, vorzugsweise um einen Überstand UL von mindestens 50cm. Die Tankschläuche 5 sind hier als Schlauchauszug an ihren jeweilige Galgen 21 aufgehängt (Details dazu siehe Fig.2). Der Schlauchauszug ermöglicht, dass der Arbeitsbereich VA des jeweiligen Tankschlauchs 5 mittels Ziehen am Tankschlauch 5 ziehharmonikaartig vergrößert oder verkleinert werden kann. Das Energie-Modul 1 besitzt eine Längsrichtung LR parallel zu dem zu betankenden Fahrzeug 10 in Betankungsposition BP und die Galgen 21 der Galgenvorrichtung 2 sind in Galgenrichtung in einem Winkel α kleiner 90 Grad, vorzugsweise zwischen 50 und 70 Grad, zur Längsrichtung LR des Energie-Moduls 1 ausgerichtet, sodass die Galgen 21 den variablen Arbeitsbereich VA für das sich in Betankungsposition BP befindliche Fahrzeug 10 mit Zugang von dessen Hinterseite 10a aus definieren. Die Vorderseite 12 weist eine vom zu betankenden Fahrzeug 10 zurückspringende V-Form mit ersten und zweiten V-Schenkeln 12a, 12b auf, wobei die Aufnahmeeinheiten 3 im ersten V-Schenkel 12a und das Bedienmodul 7 im zweiten Schenkel 12b angeordnet sind (siehe Fig.4). Die Galgenvorrichtung 2 ist dabei auf der Oberseite 11 des Energie-Moduls 1 über dem ersten V-Schenkel 12a angeordnet ist. Die Galgen 21 der Galgenvorrichtung 2 ragen dabei im Wesentlichen im 90 Grad-Winkel zur Vorderseite 12 des ersten V-Schenkels 12a über diese Vorderseite heraus.

Fig.2 zeigt eine Ausführungsform des erfindungsgemäßen Energie-Moduls 1 im Ausschnitt des ersten Schenkels 12a mit Galgenvorrichtung 2, Tankschläuchen 5 und Zapfpistolen 4 gehalten in den Aufnahmeeinheiten 3. Die vier Galgen 21 der Galgenvorrichtung 2 umfasst jeweils einer Laufschiene 22 entlang des Galgens 21, wobei der jeweilige Tankschlauch 5 in mehreren Schlaufen 51 hintereinander entlang der Laufschiene 22 als Schlauchauszug angeordnet ist, wobei jede Schlaufe 51 mit einer entlang der Laufschiene 22 schiebbaren Schlaufenaufhängung 23 mit der Laufschiene 22 verbunden ist, sodass der Arbeitsbereich VA des jeweiligen Tankschlauchs 5 mittels Ziehen am Tankschlauch 5 entlang der Laufschiene 22 ziehharmonikaartig vergrößert oder verkleinert werden kann. Die Vorderseite 12 umfasst hierbei im Bereich der Aufnahmeeinheiten 3 für die Zapfpistolen 4 eine geeignet geformte Einbuchtung 13, so dass die in den Aufnahmeeinheiten 3 gehalterten Zapfpistolen 4 nicht über die Vorderseite 12 außerhalb der Einbuchtung 13 herausragen. Der jeweilige Tankschlauch 5 besitzt zwischen letzter Schlaufenaufhängung 51 vor der Zapfpistole 4 und der Zapfpistole 4 eine nicht variable Länge, die so bemessen ist, dass die Zapfpistole 4 bei einem freien Hängen des Tankschlauchs 5 an der letzten Schlaufenaufhängung 51 nicht einen Boden 110, auf dem das Energie-Modul 1 aufgestellt ist, berührt.

Fig.3 zeigt eine Seitenansicht im Schnittbild einer Zapfpistole 4 gehalten in der Aufnahmeeinheit 3 des Energie-Moduls1. Hierbei gleicht die Aufnahmeeinheit 3 für die Zapfpistole 4 dem Teil des für diese Zapfpistole 4 vorgesehenen Tankstutzens 20 des Fahrzeugs 10, der die Zapfpistole 4 beim Tankvorgang aufnimmt. Hierbei kann der Handgriff 41 der Zapfpistole 4 vollständig mit einer Beschichtung 411 versehen sein, die eine antibakterielle und/oder antivirale Wirkung besitzt. Beispielsweise umfasst die Beschichtung 411 Silberionen. Als antibakterielle / antivirale Materialien können beispielsweise auch Nanosilber, Kupfer, Hydrogele, Chitosan, Silane, Sulfate, Graphen und Kohlenstoff-Nanoröhren, AMPS, Flüssigmetalle und viele andere verwendet werden. Solche Materialien können selbstreinigende Beschichtungen und Oberflächen bilden. Zum Beispiel kann eine antivirale Beschichtung mit selbstreinigender Technologie auf Basis von quaternärem Silan-Ammonium bereitgestellt werden. Auch polymere Biozide verkörpern antimikrobielle Eigenschaften. Dotiertes Hydrogelen könnte antimikrobielle Wirkstoffe umfassen und/oder freisetzen. Der Handgriff 41 der Zapfpistole 4 könnte eine Beschichtung 411 aus einem dieser Materialien umfassen. Diese Materialien könnten beispielsweise als Lack mittels Streichen, Sprühen oder auf eine andere Weise auf den Handgriff 41 der Zapfpistole 4 aufgetragen werden. Die Aufnahmeeinheiten 3 für die Zapfpistolen 4 mit Handgriff 41 umfassen jeweils eine Führungsschiene 31, auf der der Handgriff 41 der Zapfpistole 4 während der Halterung durch die Aufnahmeeinheit 3 in definierter Position ruht, und einen Schalter 32, beispielsweise einen Magnetschalter, wobei der Schalter 32 dazu vorgesehen ist, einerseits das Vorhandensein der Zapfpistole 4 in der definierten Position zu detektieren und andererseits nach Entnahme der Zapfpistole 4 aus der Aufnahmeeinheit 3 den Tankvorgang für diese Zapfpistole 4 freizuschalten. Die Zapfpistolen 4 des Energie-Moduls 1, die zur Betankung mit flüssigen Kraftstoffen jeglichen Typs dienen, umfassen ein Ventil 42 im Auslauf 43 der jeweiligen Zapfpistole 4, das nach Beendigung des Tankvorgangs den Auslauf 43 der Zapfpistole 4 zur Vermeidung von abtropfendem Kraftstoff verschließt. Das Ventil 42 ist hierbei ein Magnetventil, das in Strömungsrichtung des Kraftstoffs bei Betankung gesehen vor einem Venturizapfen 44 im Auslauf 43 für eine automatische Abschaltung der der Zapfpistole 4 angeordnet ist.

Fig.4 zeigt eine weitere Ausführungsform des Energie-Moduls 1 in perspektivischer Ansicht als Doppelzapfsäule, wie bereits in Fig.1 gezeigt ist, hier mit einem Luftmanagementsystem 6. Die Vorderseite 12 weist eine vom zu betankenden Fahrzeug 10 zurückspringende V-Form mit ersten und zweiten V-Schenkeln 12a, 12b auf, wobei die Aufnahmeeinheiten 3 im ersten V-Schenkel 12a und das Bedienmodul 7 im zweiten Schenkel 12b angeordnet sind. Das Energie-Modul 1 umfasst hier ein Servicemodul 50 zugänglich von beiden Seiten der Doppelzapfsäule 1 zumindest zur Abgabe eines oder mehrere Elemente umfassend Lebensmittel, Getränke, Sanitärartikel, Zigaretten, vorzugsweise mittels eines oder mehrerer Ausgabeautomaten, umfasst, das ebenfalls angrenzend an dem für die Betankung der Fahrzeuge 10 vorgesehen Bereich BR angeordnet ist. Das Energie-Modul 1 bildet hier mit dem Servicemodul 50 eine bauliche Einheit mit einem gemeinsamen Gehäuse 60 und umfasst einen für Menschen bereitgestellten Durchgang 70 von einer der Seite 1a zu der anderen der Seiten 1b der Doppel-Zapfstation 1. Das Energie-Modul 1 als Doppelzapfsäule umfasst des Weiteren ein in die Vorderseite 12 integriertes Luftmanagementsystem 6 zumindest zum Abblasen von Frischluft FL durch eine Belüftungsöffnung 61 in der Vorderseite 12, wobei die Belüftungsöffnung 61 und die Menge der abgeblasenen Frischluft FL so gestaltet sind, dass ein Luftstrom der abgeblasenen Frischluft FL etwaige Tank-Gase von dem Energie-Modul 1 entfernt oder zumindest verdünnt. Die Belüftungsöffnung 61 kann dabei auch oberhalb der Aufnahmeeinheiten 3 so angeordnet sein, dass in diesem Fall die Frischluft FL von oben über die Aufnahmeeinheiten 3 hinweg nach unten in Richtung eines Bereichs BR zur Betankung des Fahrzeugs 10 abgeblasen wird. Grundsätzlich kann die Frischluft FL zusätzlich mit Duftstoffen versehen werden.

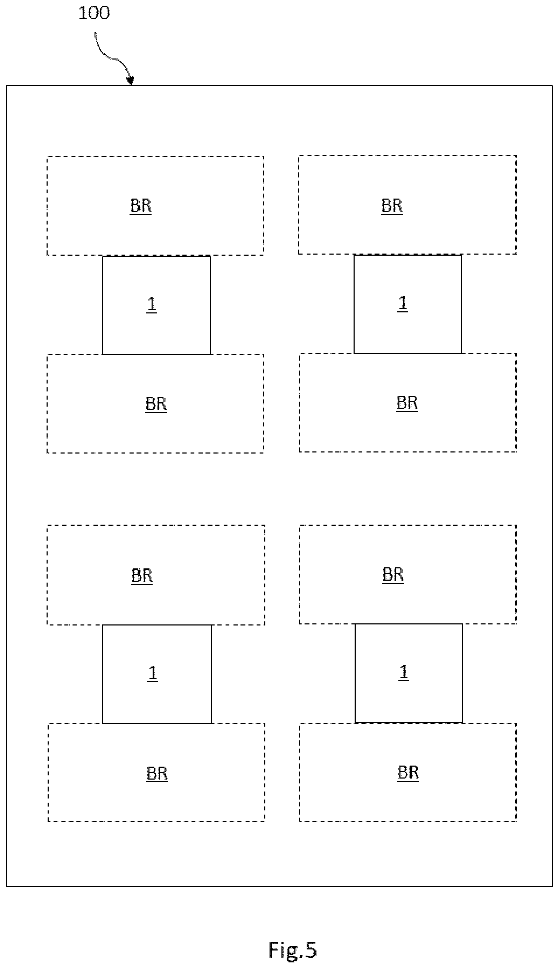

Fig.5 zeigt eine schematische Darstellung einer Ausführungsform der erfindungsgemäßen Tankstelle 100 mit mehreren Energie-Modulen 1 gemäß vorliegender Erfindung zur Bereitstellung verschiedener Kraftstoffarten über separate Tankschläuche 5, die einen variablen Arbeitsbereich VA zur beidseitigen Betankung von Fahrzeugen 10 über die am Ende der jeweiligen Tankschläuchen 5 befindlichen Zapfpistolen 4 besitzen. Die in dieser Tankstelle 100 gezeigte Energie-Module 1 sind alle als Doppelzapfsäulen ausgebildet. Der Bereich BR für die Betankung von Fahrzeugen 10 ist gestrichelt skizziert. Je nach Ausrichtung der Galgenvorrichtung 2 kann sich dieser Bereich BR innerhalb des gestrichelten Bereichs nach links oder rechts verschieben.

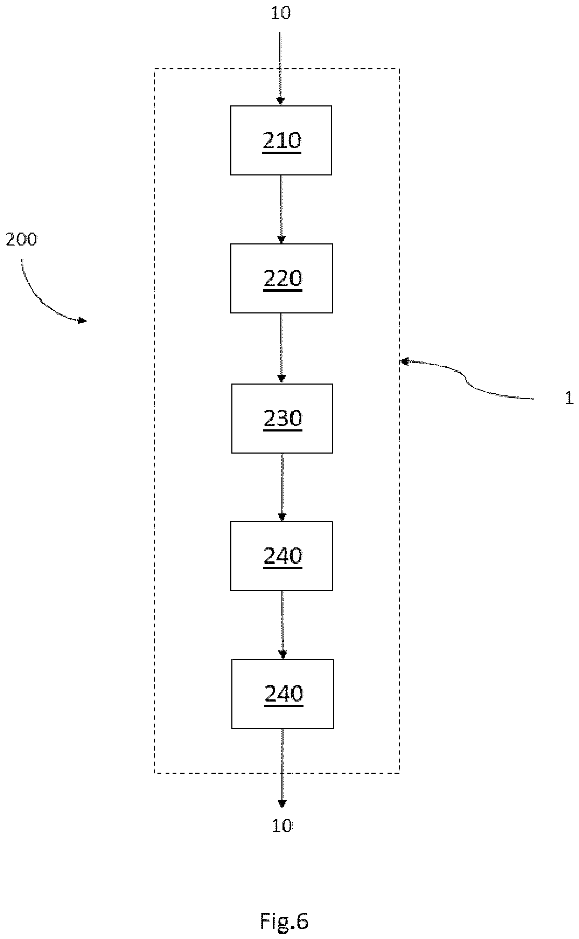

Fig.6 zeigt eine Ausführungsform des erfindungsgemäßen Verfahrens 200 zur beidseitigen Betankung von Fahrzeugen 10 mit einem erfindungsgemäßen Energie-Modul 1 mit verschiedenen Kraftstoffarten über separate Tankschläuche 5 über die am Ende der jeweiligen Tankschläuchen 5 befindlichen Zapfpistolen 4, wobei auf einer Oberseite 11 des Energie-Moduls 1 eine Galgenvorrichtung 2 mit jeweils einem über die dem zu betankenden Fahrtzeug 10 zugewandten Vorderseite 12 des Energie-Moduls 1 herausragenden Galgen 2 pro Tankschlauch 5, wobei die Galgen 21 jeweils einer Laufschiene 22 entlang des jeweiligen Galgens 21 umfassen, an der der jeweilige Tankschlauch 5 mit Schlaufen 51 in Form eines ziehharmonikaartig aus- und einziehbaren Schlauchauszug schlaufenweise aufgehängt ist, damit die Tankschläuche 5 einen variablen Arbeitsbereich VA für die beidseitige Betankung besitzen, wobei das Energie-Modul 1 eine Längsrichtung **LR** parallel zu dem zu betankenden Fahrzeug 10 in Betankungsposition **BP** besitzt und die Galgen 21 der Galgenvorrichtung 2 in Galgenrichtung einem Winkel α kleiner 90 Grad, vorzugsweise zwischen 50 und 70 Grad, zur Längsrichtung **LR** des Energie-Moduls 1 ausgerichtet sind, sodass die Galgen 21 den variablen Arbeitsbereich VA für das sich in Betankungsposition **BP** befindliche Fahrzeug 10 mit Zugang von dessen Hinterseite 10a aus definieren, umfassend nachfolgende Schritte des Entfernens 210 der für den Betankungsvorgang geeigneten Zapfpistole 4 aus der betreffenden Aufnahmeeinheit 3, des Ziehens 220 des mit dieser Zapfpistole 4 verbundenen Tankschlauchs 5 entlang der Laufschiene 22 in Richtung einer Hinterseite 10a des zu betankenden Fahrzeugs 10 zur ziehharmonikaartigen Vergrößerung des Arbeitsbereichs VA des Tankschlauchs 5, damit die Zapfpistole 4 in einen Tankstutzen 20 des Fahrzeugs 10 gesteckt werden kann, unabhängig davon, auf welcher Position und Seite des Fahrzeugs 10 der Tankstutzen 20 angeordnet ist, des Einsteckens 230 der Zapfpistole 4 in den Tankstutzen 20 des Fahrzeugs 10 und Betanken des Fahrzeugs 10 mit der Zapfpistole 4, des Ziehens 240 des Tankschlauchs 5 entlang der Laufschiene 22 in Richtung der Vorderseite 12 des Energie-Moduls 1 zur ziehharmonikaartigen Verkleinerung des Arbeitsbereichs VA des Tankschlauchs 5 nach Beendigung des Betankens; und des Aufnehmens 250 der Zapfpistole 4 in die betreffende Aufnahmeeinheit 3 zum Abschluss des Betankens.

### Liste der Bezugszeichen

- 1: erfindungsgemäßes Energie-Modul
- 1a: eine Seite des Energie-Moduls entlang dessen Längsrichtung
- 1b: andere gegenüberliegende Seite des Energie-Moduls entlang dessen Längsrichtung
- 11: Oberseite des Energie-Moduls
- 12: Vorderseite des Energie-Moduls zugewandt zum zu betankenden Fahrzeug
- 12a: erster V-Schenkel der V-förmigen
- 12b: zweiter V-Schenkel der V-förmigen
- 13: Einbuchtung für die Aufnahmeeinheiten in der Vorderseite
- 2: Galgenvorrichtung
- 21: Galgen der Galgenvorrichtung
- 22: Laufschiene des Galgens
- 23: schiebbaren Schlaufenaufhängung der Laufschiene
- 3: Aufnahmeeinheiten für die Zapfpistolen
- 31: Führungsschiene für den Handgriff der Zapfpistole
- 32: Schalter der Führungsschiene, beispielsweise ein Magnetschalter
- 4: Zapfpistole
- 41: Handgriff der Zapfpistole
- 411: Beschichtung des Handgriffs der Zapfpistole
- 42: Ventil zur Vermeidung eines Abtropfens von Kraftstoff
- 43: Auslauf der jeweiligen Zapfpistole
- 44: Venturizapfen im Auslauf der jeweiligen Zapfpistole
- 5: Tankschlauch
- 51: Schlaufe des Tankschlauchs
- 6: Luftmanagement
- 61: Belüftungsöffnung
- 63: Duftmodul
- 7: Bedienmodul
- 8: Stoßsschutz
- 10: Fahrzeug
- 10a: Hinterseite des Fahrzeugs
- 20: Tankstutzen des Fahrzeugs
- 50: Servicemodul
- 60: gemeinsames Gehäuse
- 70: Durchgang im Servicemodul von einer zu anderen Seite der Doppel-Zapfstation
- 100: erfindungsgemäße Tankstelle
- 110: Boden
- 200: erfindungsgemäßes Verfahren zur beidseitigen Betankung von Fahrzeugen
- 210: Entfernen der für den Betankungsvorgang geeigneten Zapfpistole aus der betreffenden Aufnahmeeinheit
- 220: Ziehen des mit dieser Zapfpistole verbundenen Tankschlauchs entlang der Laufschiene in Richtung einer Hinterseite des zu betankenden Fahrzeugs
- 230: Einstecken der Zapfpistole in den Tankstutzen des Fahrzeugs und Betanken des Fahrzeugs mit der Zapfpistole
- 240: Ziehen des Tankschlauchs entlang der Laufschiene in Richtung der Vorderseite des Energie-Moduls
- 250: Aufnehmen der Zapfpistole in die betreffende Aufnahmeeinheit zum Abschluss des Betankens

- α: Winkel zwischen Längsrichtung Energie-Modul und Galgenrichtung
- B: Benutzer des Energie-Moduls
- BR: Bereich für die Betankung von Fahrzeugen
- BP: Betankungsposition
- FL: Frischluft
- LR: Längsrichtung des Energie-Moduls
- UL: Überstand, um den die Galgen über die Vorderseite des Energie-Moduls herausragen
- VA: variabler Arbeitsbereich des Tankschlauchs

## Patentansprüche

1. Ein Energie-Modul (1) zur Bereitstellung verschiedener Kraftstoffarten über separate Tankschläuche (5), die einen variablen Arbeitsbereich (VA) zur beidseitigen Betankung von Fahrzeugen (10) über die am Ende der jeweiligen Tankschläuchen (5) befindlichen Zapfpistolen (4) besitzen,
- wobei das Energie-Modul (1) eine nach oben abschließende Oberseite (11) sowie eine dem zu betankenden Fahrzeug (10) zugewandte Vorderseite (12) mit mehreren Aufnahmeeinheiten (3) zur Halterung der jeweiligen Zapfpistole (4) vor und nach der Betankung und mit einem Bedienmodul (7) zumindest für die Betankung umfasst,
- wobei mindestens eine Galgenvorrichtung (2) auf der Oberseite (11) des Energie-Moduls (1) angeordnet ist, die pro Tankschlauch (5) einen Galgen (21) mit einer Laufschiene (22) entlang des Galgens (21) umfasst, wobei die Galgen (21) der Galgenvorrichtung (2) im Wesentlichen zueinander parallel ausgerichtet sind und über die Vorderseite (12) des Energie-Moduls (1) herausragen, vorzugsweise um einen Überstand (UL) von mindestens 50cm,
- wobei der jeweilige Tankschlauch (5) in mehreren Schlaufen (51) hintereinander entlang der Laufschiene (22) als Schlauchauszug angeordnet ist, wobei jede Schlaufe (51) mit einer entlang der Laufschiene (22) schiebbaren Schlaufenaufhängung (23) mit der Laufschiene (22) verbunden ist, sodass der Arbeitsbereich (VA) des jeweiligen Tankschlauchs (5) mittels Ziehen am Tankschlauch (5) entlang der Laufschiene (22) ziehharmonikaartig vergrößert oder verkleinert werden kann,
- wobei das Energie-Modul (1) eine Längsrichtung (LR) parallel zu dem zu betankenden Fahrzeug (10) in Betankungsposition (BP) besitzt und die Galgen (21) der Galgenvorrichtung (2) in Galgenrichtung einem Winkel (α) kleiner 90 Grad, vorzugsweise zwischen 50 und 70 Grad, zur Längsrichtung (LR) des Energie-Moduls (1) ausgerichtet sind, sodass die Galgen (21) den variablen Arbeitsbereich (VA) für das sich in Betankungsposition (BP) befindliche Fahrzeug (10) mit Zugang von dessen Hinterseite (10a) aus definieren.

2. Das Energie-Modul (1) gemäß Anspruch 1,
**dadurch gekennzeichnet, dass**
die Vorderseite (12) eine vom zu betankenden Fahrzeug (10) zurückspringende V-Form mit ersten und zweiten V-Schenkeln (12a, 12b) aufweist, wobei die Aufnahmeeinheiten (3) im ersten V-Schenkel (12a) und das Bedienmodul (7) im zweiten Schenkel (12b) angeordnet sind.

3. Das Energie-Modul (1) gemäß Anspruch 2,
**dadurch gekennzeichnet, dass**
die Galgenvorrichtung (2) auf der Oberseite (11) des Energie-Moduls (1) über dem ersten V-Schenkel (12a) angeordnet ist.

4. Das Energie-Modul (1) gemäß Anspruch 3,
**dadurch gekennzeichnet, dass**
die Galgen (21) der Galgenvorrichtung (2) im Wesentlichen im 90 Grad-Winkel zur Vorderseite (12) des ersten V-Schenkels (12a) über diese Vorderseite herausragen.

5. Das Energie-Modul (1) gemäß einem der voranstehenden Ansprüche, **dadurch gekennzeichnet, dass**
die Vorderseite (12) im Bereich der Aufnahmeeinheiten (3) für die Zapfpistolen (4) eine geeignet geformte Einbuchtung (13) umfasst, so dass die in den Aufnahmeeinheiten (3) gehalterten Zapfpistolen (4) nicht über die Vorderseite (12) außerhalb der Einbuchtung (13) herausragen.

6. Das Energie-Modul (1) gemäß einem der voranstehenden Ansprüche, **dadurch gekennzeichnet, dass**
der jeweilige Tankschlauch (5) zwischen letzter Schlaufenaufhängung (51) vor der Zapfpistole (4) und der Zapfpistole (4) eine nicht variable Länge besitzt, die so bemessen ist, dass die Zapfpistole (4) bei einem freien Hängen des Tankschlauchs (5) an der letzten Schlaufenaufhängung (51) nicht einen Boden (110), auf dem das Energie-Modul (1) aufgestellt ist, berührt.

7. Das Energie-Modul (1) gemäß einem der voranstehenden Ansprüche, **dadurch gekennzeichnet, dass**
jede Zapfpistole (4) einen Handgriff (41) umfasst, der zumindest bereichsweise, vorzugsweise vollständig, eine Beschichtung (411) umfasst, die eine antibakterielle und/oder antivirale Wirkung besitzt, vorzugsweise umfasst die Beschichtung (411) Silberionen.

8. Das Energie-Modul (1) gemäß einem der voranstehenden Ansprüche, **dadurch gekennzeichnet, dass**
die Aufnahmeeinheiten (3) für die Zapfpistolen (4) mit Handgriff (41) jeweils eine Führungsschiene (31), auf der der Handgriff (41) der Zapfpistole (4) während der Halterung durch die Aufnahmeeinheit (3) in definierter Position ruht, und einen Schalter (32), beispielsweise einen Magnetschalter, umfasst, wobei der Schalter (32) dazu vorgesehen ist, einerseits das Vorhandensein der Zapfpistole (4) in der definierten Position zu detektieren und andererseits nach Entnahme der Zapfpistole (4) aus der Aufnahmeeinheit (3) den Tankvorgang für diese Zapfpistole (4) freizuschalten.

9. Das Energie-Modul (1) gemäß einem der voranstehenden Ansprüche, **dadurch gekennzeichnet, dass**
die Zapfpistolen (4) des Energie-Moduls (1), die zur Betankung mit flüssigen Kraftstoffen jeglichen Typs dienen, ein Ventil (42) im Auslauf (43) der jeweiligen Zapfpistole (4) umfassen, das nach Beendigung des Tankvorgangs den Auslauf (43) der Zapfpistole (4) zur Vermeidung von abtropfendem Kraftstoff verschließt.

10. Das Energie-Modul (1) gemäß Anspruch 9,
**dadurch gekennzeichnet, dass**
das Ventil (42) ein Magnetventil ist, das in Strömungsrichtung des Kraftstoffs bei Betankung gesehen vor einem Venturizapfen (44) im Auslauf (43) für eine automatische Abschaltung der der Zapfpistole (4) angeordnet ist.

11. Das Energie-Modul (1) gemäß einem der voranstehenden Ansprüche,
**dadurch gekennzeichnet, dass**
das Energie-Modul (1) als Doppel-Zapfstation ausgeführt ist, die auf beiden Seiten (1a, 1b) entlang zu Ihrer Längsrichtung (LR) jeweilige Vorderseiten (12) mit jeweiligen mehreren Aufnahmeeinheiten (3) zur Halterung der jeweiligen Zapfpistole (4) vor und nach der Betankung und mit einem Bedienmodul (7) zumindest für die Betankung umfasst und auf der gemeinsamen Oberseite (11) je eine Galgenvorrichtung (2) zu jeder der beiden Seite (1a, 1b) mit den betreffenden Galgen (21) und Tankschläuchen (5) angeordnet ist, vorzugsweise sind die Vorderseiten (12), die Aufnahmeeinheiten (3), die Bedienmodule (7) und die Galgenvorrichtungen (2) mit den jeweiligen Galgen (21) für beide Seiten der Doppel-Zapfstation (1) zu der Längsrichtung (LR) der Doppel-Zapfstation (1) spiegelbildlich symmetrisch zueinander angeordnet.

12. Das Energie-Modul (1) gemäß einem der voranstehenden Ansprüche,
**dadurch gekennzeichnet, dass**
das Energie-Modul (1) mindestens ein Servicemodul (50) zumindest zur Abgabe eines oder mehrere Elemente umfassend Lebensmittel, Getränke, Sanitärartikel, Zigaretten, vorzugsweise mittels eines oder mehrerer Ausgabeautomaten, umfasst, das ebenfalls angrenzend an dem für die Betankung der Fahrzeuge (10) vorgesehen Bereich (BR) angeordnet ist, vorzugsweise bildet das Energie-Modul (1) mit dem Servicemodul (50) eine bauliche Einheit mit einem gemeinsamen Gehäuse (60).

13. Das Energie-Modul (1) gemäß Anspruch 12,
**dadurch gekennzeichnet, dass**
das Servicemodul (50) im Falle des Energie-Moduls (1) ausgebildet als Doppel-Zapfstation als gemeinsames von beiden Seiten (1a, 1b) der Doppel-Zapfstation (1) benutzbares Servicemodul (50) ausgeführt ist, vorzugsweise umfasst das Servicemodul (50) einen für Menschen bereitgestellten Durchgang (70) von einer der Seite (1a) zu der anderen der Seiten (1b) der Doppel-Zapfstation (1).

14. Das Energie-Modul (1) gemäß einem der voranstehenden Ansprüche,
**dadurch gekennzeichnet, dass**
das Energie-Modul (1) ein in die Vorderseite (12) integriertes Luftmanagementsystem (6) zumindest zum Abblasen von Frischluft (FL) durch eine Belüftungsöffnung (61) in der Vorderseite (12) umfasst, wobei die Belüftungsöffnung (61) und die Menge der abgeblasenen Frischluft (FL) so gestaltet sind, dass ein Luftstrom der abgeblasenen Frischluft (FL) etwaige Tank-Gase von dem Energie-Modul (1) entfernt oder zumindest verdünnt, vorzugsweise ist die Belüftungsöffnung (61) dabei oberhalb der Aufnahmeeinheiten (3) so angeordnet ist, dass die Frischluft (FL) von oben über die Aufnahmeeinheiten (3) hinweg nach unten in Richtung eines Bereichs (BR) zur Betankung des Fahrzeugs (10) abgeblasen wird,
besonders bevorzugt kann die Frischluft (FL) zusätzlich mit Duftstoffen versehen werden.

15. Eine Tankstelle (100) mit ein oder mehrere Energie-Modulen (1) nach einem der Ansprüche 1 bis 14 zur Bereitstellung verschiedener Kraftstoffarten über separate Tankschläuche (5), die einen variablen Arbeitsbereich (VA) zur beidseitigen Betankung von Fahrzeugen (10) über die am Ende der jeweiligen Tankschläuchen (5) befindlichen Zapfpistolen (4) besitzen.

16. Ein Verfahren (200) zur beidseitigen Betankung von Fahrzeugen (10) mit einem Energie-Modul (1) nach einem der Ansprüche 1 bis 14 mit verschiedenen Kraftstoffarten über separate Tankschläuche (5) über die am Ende der jeweiligen Tankschläuchen (5) befindlichen Zapfpistolen (4), wobei auf einer Oberseite (11) des Energie-Moduls (1) eine Galgenvorrichtung (2) mit jeweils einem über die dem zu betankenden Fahrtzeug (10) zugewandten Vorderseite (12) des Energie-Moduls (1) herausragenden Galgen (2) pro Tankschlauch (5), wobei die Galgen (21) jeweils einer Laufschiene (22) entlang des jeweiligen Galgens (21) umfassen, an der der jeweilige Tankschlauch (5) mit Schlaufen (51) in Form eines ziehharmonikaartig aus- und einziehbaren Schlauchauszug schlaufenweise aufgehängt ist, damit die Tankschläuche (5) einen variablen Arbeitsbereich (VA) für die beidseitige Betankung besitzen, wobei das Energie-Modul (1) eine Längsrichtung (LR) parallel zu dem zu betankenden Fahrzeug (10) in Betankungsposition (BP) besitzt und die Galgen (21) der Galgenvorrichtung (2) in Galgenrichtung einem Winkel (α) kleiner 90 Grad, vorzugsweise zwischen 50 und 70 Grad, zur Längsrichtung (LR) des Energie-Moduls (1) ausgerichtet sind, sodass die Galgen (21) den variablen Arbeitsbereich (VA) für das sich in Betankungsposition (BP) befindliche Fahrzeug (10) mit Zugang von dessen Hinterseite (10a) aus definieren, umfassend nachfolgende Schritte:
- Entfernen (210) der für den Betankungsvorgang geeigneten Zapfpistole (4) aus der betreffenden Aufnahmeeinheit (3),
- Ziehen (220) des mit dieser Zapfpistole (4) verbundenen Tankschlauchs (5) entlang der Laufschiene (22) in Richtung einer Hinterseite (10a) des zu betankenden Fahrzeugs (10) zur ziehharmonikaartigen Vergrößerung des Arbeitsbereichs (VA) des Tankschlauchs (5), damit die Zapfpistole (4) in einen Tankstutzen (20) des Fahrzeugs (10) gesteckt werden kann, unabhängig davon, auf welcher Position und Seite des Fahrzeugs (10) der Tankstutzen (20) angeordnet ist,
- Einstecken (230) der Zapfpistole (4) in den Tankstutzen (20) des Fahrzeugs (10) und Betanken des Fahrzeugs (10) mit der Zapfpistole (4),
- Ziehen (240) des Tankschlauchs (5) entlang der Laufschiene (22) in Richtung der Vorderseite (12) des Energie-Moduls (1) zur ziehharmonikaartigen Verkleinerung des Arbeitsbereichs (VA) des Tankschlauchs (5) nach Beendigung des Betankens; und
- Aufnehmen (250) der Zapfpistole (4) in die betreffende Aufnahmeeinheit (3) zum Abschluss des Betankens.
